# EUROPÄISCHE PATENTSCHRIFT

(11) **EP 3 626 042 B1**
(45) Veröffentlichungstag und Bekanntmachung des Hinweises auf die Patenterteilung: **24.02.2021**
(21) Anmeldenummer: 19000416.8
(22) Anmeldetag: 18.09.2019
(51) Int. Cl.: A01C 23/00

(54) **KOMBINIERTE SEPARATOR- UND VERTEILVORRICHTUNG FÜR GÜLLE, GÄRRESTE UND ÄHNLICHES**
COMBINED SEPARATOR AND DISTRIBUTION DEVICE FOR MANURE, DIGESTATE AND THE LIKE
DISPOSITIF DE SÉPARATION ET DE DISTRIBUTION COMBINÉ POUR LISIERS, RÉSIDUS DE FERMENTATION ET ANALOGUES

(30) Priorität: 18.09.2018 DE 102018007357
(43) Veröffentlichungstag der Anmeldung: 25.03.2020
(73) Patentinhaber: Mößmer, Helmut, 89294 Oberroth (DE)
(72) Erfinder: Mößmer, Helmut, 89294 Oberroth (DE)
(74) Vertreter: Gallo, Wolfgang

(56) Entgegenhaltungen:
- EP-A1- 0 856 243
- DE-U1- 9 000 461
- DE-U1-202011 050 326

## Beschreibung

Die Erfindung betrifft eine kombinierte Separator- und Verteilvorrichtung zum Abtrennen von Feststoffen und Fremdkörpern aus einer feststoffbeladenen Flüssigkeit und zum Verteilen der Flüssigkeit auf eine Vielzahl von Leitungen.

Ein Hauptanwendungsgebiet der Erfindung sind Vorrichtungen zum Ausbringen von Gülle oder Gärresten aus Biogas-Anlagen auf landwirtschaftlichen Flächen.

Zum Ausbringen von Gülle oder Gärresten werden heute Schleppschlauchverteiler unter Gesichtspunkten des Umweltschutzes gegenüber Breitverteilern bevorzugt, die einen breit verteilten Strahl auswerfen. Bei Schleppschlauchverteilern erfolgt die Ausbringung durch eine Vielzahl von mit relativ kleinen seitlichen Abständen von etwa 25 cm nebeneinander über die Verteilbreite angeordnete Schläuche, die gewöhnlich mit einem Verteilbalken oder mit Verteilarmen verbunden sind, und deren Enden auf dem Boden aufliegen und die Gülle oder Gärreste streifenförmig ausfließen lassen.

Während bei Breitverteilern wegen der großen Lichtweite der Düsenrohre in der Flüssigkeit enthaltene Feststoffe regelmäßig unproblematisch sind, führen feste Bestandteile bei Schlauchverteilern schnell zur Verstopfung der Schläuche. In Gülle oder Gärresten ist häufig ein erheblicher Anteil an langen größeren Feststoffteilen, insbesondere Heu und Stroh, enthalten, aber auch sonstige Futterreste, Holzstücke oder Steine können darin enthalten sein. Diese Feststoffe verursachen große Probleme bei der Zufuhr in die Schläuche. Deshalb müssen alle größeren Feststoffpartikel entweder zerkleinert oder abgetrennt werden. Allerdings hilft oft auch eine Zerkleinerung nicht zuverlässig, insbesondere bei einem höheren Gehalt an Feststoffen, weil auch beim Zerkleinern aufgrund der überwiegend vorhandenen Stroh- oder Heubestandteilen längere Partikel verbleiben, die durch Vernetzen und Verklumpen eine große Verstopfungsgefahr bedeuten, was bei regelmäßig 20 bis 40 oder noch mehr Schläuchen sehr problematisch ist.

Ein aus der EP 3 127 416 B1 bekannter Gülle-Schleppschlauchverteiler weist einen Verteilbalken auf, in welchen ein aus einem Güllefaß kommendes Zufuhrrohr für die feststoffbeladene Gülle an einem Balkenende einmündet. Entlang des Verteilerbalkens sind Auslaufstutzen zum Anschließen der Schläuche angeordnet. Im Verteilerbalken über den Einlassöffnungen der Auslaufstutzen ist eine Schnecke angeordnet, die sich über die Länge des Verteilerbalkens und über alle Einlassöffnungen erstreckt und motorisch gedreht wird, um in der Gülle befindliche Feststoffe in Richtung zu dem vom Zuführrohr entfernten Ende des Verteilerbalkens in einen dort angeordneten Auffangkasten zu fördern. Dabei wird die Schnecke jeweils nach einer gewissen Drehperiode in Vorderrichtung kurzzeitig rückwärts gedreht. Die Schnecke dient dazu, die Einlassöffnungen der Auslassstutzen von Feststoffen freizuräumen.

Bei dieser bekannten Anordnung kann die Schnecke allerdings nicht verhindern, dass Feststoffe in die Einlassöffnungen der Auslassstutzen gelangen und diese oder die angeschlossenen Schläuche doch verstopfen. Außerdem erscheint die Anordnung insofern ungünstig, jedenfalls bei nicht unerheblicher Belastung der Gülle mit Feststoffteilen, als die sich über die ganze Länge des Verteilerbalkens erstreckende Schnecke sich zum austrittseitigen Ende hin zunehmend stärker mit Feststoffen füllt, so dass am einlassseitigen Endbereich des Verteilerbalkens angeordnete Schläuche besser gespeist werden als weiter zum austrittsseitigen Ende der Schnecke hin angeordnete Schläuche, so dass die Verteilung der Gülle über die verteilte Breite und gleichmäßig erfolgt.

Die EP 0 856 243 A1 offenbart eine kombinierte Separator- und Verteilvorrichtung für feststoffbeladene Flüssigkeiten nach dem Oberbegriff des Anspruchs 1.

Der Erfindung liegt die Aufgabe zugrunde, eine kombinierte Separator- und Verteilvorrichtung zu schaffen, mit welcher Feststoffe aus einer feststoffbeladenen Flüssigkeit abgeschieden werden können und die Flüssigkeit auf eine Vielzahl von Leitungen oder Schläuchen verteilt werden kann, welche die Nachteile der bekannten Anordnung nicht aufweist und darüber hinaus weitere vorteilhafte Möglichkeiten eröffnet.

Diese Aufgabe wird gemäß der Erfindung durch die im Anspruch 1 angegebene Vorrichtung gelöst. Vorteilhafte Ausgestaltungen und Weiterbildungen der Erfindung sind Gegenstand der Unteransprüche.

Bei der erfindungsgemäßen Anordnung ist eine im wesentlichen vertikal orientierte Separator- und Verteilerkammer vorgesehen, an deren Umfang eine Vielzahl von radialen Auslässen zum Anbringen von Schläuchen oder Leitungen vorgesehen ist, und deren radial innerer, als Separatorkammer dienender Bereich durch ein Gitter oder Sieb von deren radial äußerem, als Verteilerkammer dienendem Bereich getrennt ist. Die radialen Auslässe können demzufolge die Gestalt von Schlitzen, runden oder anders geformten Löchern haben.

Eine reine Separatorvorrichtung zum Trennen von Flüssigkeit und darin suspendierten Feststoffen, beispielsweise in Gestalt von Gülle, bei welchem eine Förderschnecke die feststoffbeladene Flüssigkeit axial durch eine von einem Siebgitter umgebene Separatorkammer fördert und die Flüssigkeit durch das Siebgitter austritt, ist aus der EP 0 367 037 A2 und aus der AT 394 995 B an sich bekannt.

In der Separatorkammer ist eine Schnecke angeordnet, deren Achse mit der Achse der Separatorkammer zusammenfällt, also vertikal orientiert ist, um Feststoffe aus der Separatorkammer abzufördern. Die Zufuhr von feststoffbeladener Flüssigkeit erfolgt von unten vertikal nach oben in die Separatorkammer, und die Schnecke fördert Feststoffe nach oben aus der Separatorkammer ab. Von der Schnecke abgeförderte Feststoffe werden oberhalb der Separatorkammer in einen Auslass umgelenkt, durch welchen sie entweder direkt ausgeworfen oder vorzugsweise in einen Feststoffsammelbehälter geleitet werden können, in welchem vorzugsweise Restflüssigkeit abgeschieden wird, die dann in den Zulauf zur Separatorkammer rückgeführt werden kann.

Die Trennung der Separatorkammer von der Verteilerkammer erfolgt vorzugsweise durch achsparallel angeordnete Stäbe, die zwischen sich axial verlaufende Durchtrittsschlitze für die Flüssigkeit von der Separatorkammer in die Verteilerkammer bilden.

Die Schnecke hat eine mindestens der axialen Länge der Separatorkammer entsprechende axiale Länge und ist vorzugsweise in ihrer axialen Position relativ zur Separatorkammer verschiebbar, und zwar zwischen einer axialen Position, in welcher sie die Separatorkammer vollständig oder im wesentlichen durchsetzt, und einer abgesenkten Position, in welcher sie mit ihrem oberen Bereich nur einen unteren axialen Abschnitt der Separatorkammer durchsetzt. Durch diese Verstellbarkeit der Schnecke innerhalb eines axialen Bereichs kann eine Durchflusssteuerung erfolgen, da ein voller Durchfluss aus der Separatorkammer in die Verteilerkammer nur in dem Bereich erfolgt, in welchem die Schnecke arbeitet, während der Durchfluss in dem oberhalb der Schnecke befindlichen Bereich durch den sich dort bildenden Feststoffpropfen gedrosselt wird.

Um zu verhindern, dass beim Anfahren der Vorrichtung, wenn sich im oberen Bereich der Separatorkammer oder oberhalb der Separatorkammer noch kein Feststoffpfropfen gebildet hat, Flüssigkeit durch die Separatorkammer hindurch in den Feststoffauslass schießt, kann oberhalb, also stromab der Separatorkammer bzw. zwischen der Separatorkammer und dem Feststoffauslass eine Drosseleinrichtung beispielsweise in Form einer Klappe oder eines Schiebers vorgesehen sein, welche das oben liegende Austrittsende der Separatorkammer im wesentlichen verschließt, bis sich ein Feststoffpfropfen gebildet hat, und die dann geöffnet werden kann. Das ist insbesondere zweckmäßig, wenn die feststoffbeladene Flüssigkeit wie beispielsweise Gülle unter Druck zugeführt wird.

Bei Ausbildung der Drosseleinrichtung als Klappe kann diese mit vorzugsweise einstellbarer Vorspannung federbelastet sein, so dass sie sich bei Einwirkung eines erhöhten Staudrucks selbsttätig geöffnet, der sich einstellt, sobald sich ein Feststoffpfropfen gebildet hat.

Schließlich ist es zweckmäßig, oberhalb, also stromab der Separatorkammer, die Innenwandung des zur Aufnahme und zur Abfuhr der Feststoffe dienenden Rohrbereichs mit radialeinwärts vorstehenden Rippen zu versehen, um zu verhindern, dass ein sich bildender Feststoffpfropfen sich unter dem Einfluss der drehenden Schnecke mitdreht, was sich ungünstig auf die Abförderung des Feststoffpfropfens auswirken würde.

Die Erfindung wird nachstehend unter Bezugnahme auf die anliegenden Zeichnungen anhand eines Ausführungsbeispiels mehr im einzelnen beschrieben. In den Zeichnungen zeigt:

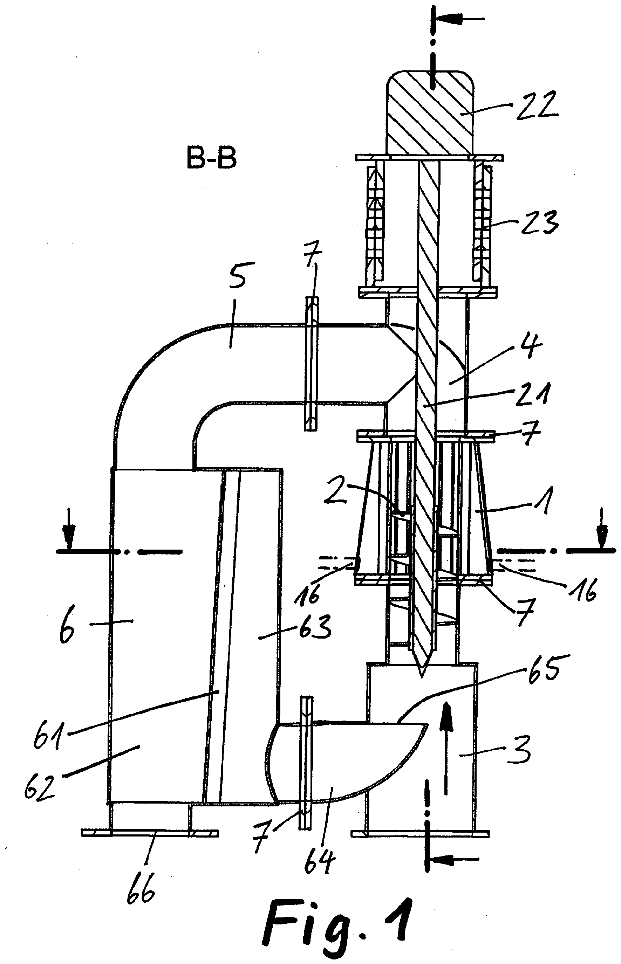

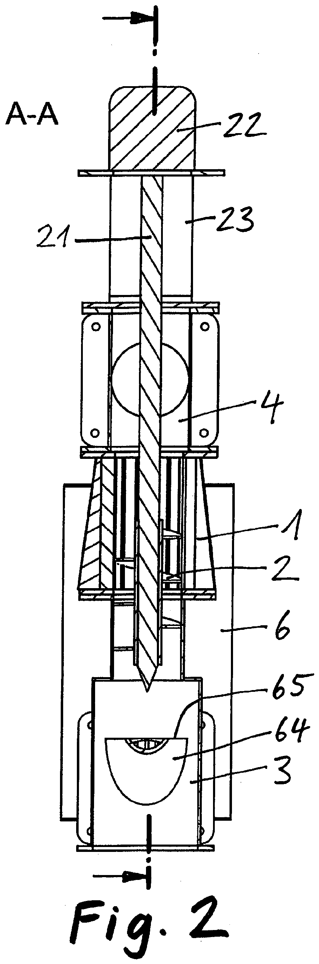

- Fig. 1: eine Vorrichtung nach der Erfindung im Vertikalschnitt längs einer Schnittebene B-B in Figur 2,
- Fig. 2: einen Vertikalschnitt längs einer Schnittebene A-A in Figur 1, und
- Fig. 3: einen Horizontalschnitt längs einer Schnittebene C-C in Figur 1.

Die Zeichnungen zeigen ein Ausführungsbeispiel der erfindungsgemäßen Vorrichtung in drei Schnittebenen, wobei die zeichnerischen Darstellungen der besseren Verständlichkeit halber sehr schematisch gehalten sind.

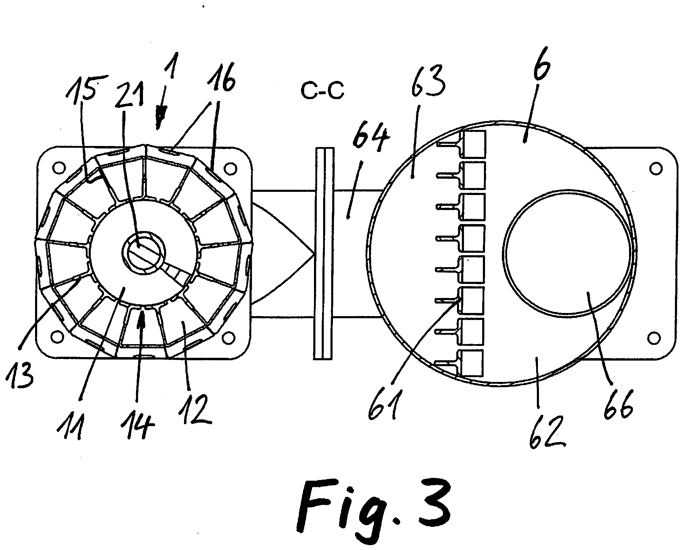

Die erfindungsgemäße Vorrichtung weist eine vertikal orientierte Separator- und Verteilerkammer 1 auf, die, wie im Horizontalschnitt nach Figur 3 ersichtlich ist, einen radial inneren Teil umfasst, der eine rohrartige Separatorkammer 11 bildet, und einen radial äußeren Teil umfasst, der die Separatorkammer 11 umgibt und eine Verteilerkammer 12 bildet. In dem die Separatorkammer 11 bildenden radial inneren Teil der Separator- und Verteilerkammer 1 ist eine Förderschnecke 2 axial angeordnet, die auf einer Welle 21 sitzt, die von einem Motor 22 angetrieben wird. Eine Teleskopanordnung 23 ermöglicht eine variable Positionierung der Schnecke 2 durch vertikale Verschiebung der Schnecke 2 samt deren Welle 21 und deren Antriebsmotor 22 innerhalb eines Axialbereichs zwischen einer maximal abgesenkten Position, in welcher die Schnecke 2 nur mit ihrem oberen Bereich einen unteren Bereich der Separatorkammer 11 durchsetzt, und einer angehobenen Position, in welcher die Schnecke 2 die Separatorkammer 11 über ihre gesamte Höhe durchsetzt. Statt der Teleskopanordnung 23, mittels welcher die gesamte Baugruppe aus Schnecke 2, weil die 21 und Antriebsmotor 22 axial verschoben werden kann, sind auch andere Mechanismen denkbar.

Die Zuleitung der feststoffbeladenen Flüssigkeit, beispielsweise Gülle, erfolgt von unten durch ein Zulaufrohr 3, das in ein unteres Ende der Separatorkammer 3 einmündet, und in welches der untere Teil der Schnecke 2 in ihrer ganz oder teilweise abgesenkten Position eintaucht.

An ihrem oberen Ende mündet die Separatorkammer 11 in ein Abförderrohr 4 aus, durch welches von der Schnecke 2 aufwärts abgeförderte Feststoffe aus der feststoffbeladenen Flüssigkeit aus der Separatorkammer 11 ausgeschoben werden. Das Abförderrohr 4, welches auch von der Achse 21 der Schnecke 2 durchsetzt wird, steht mit einem Überführungsrohr 5 in Verbindung, das in einen Feststoffsammelbehälter 6 führt.

Der Aufbau der Separator- und Verteilerkammer 1 ist in dem Horizontalschnitt nach Figur 3 in seinen Einzelheiten erkennbar. Die den radial inneren Bereich bildende Separatorkammer 11 ist von dem den radial äußeren Bereich bildenden Verteilerkammer 12 durch einen Kranz von axial verlaufenden Stäben 13 getrennt, die, wie in Figur 3 ersichtlich ist, im Querschnitt jeweils eine T-förmige Konfiguration haben, die für Stabilität sorgt, auch bei größeren Drücken der feststoffbeladenen Flüssigkeit. Die benachbarten Stäbe 13 bilden zwischen sich jeweils eine Schlitzöffnung, die sich über die Höhe oder axiale Länge der Separatorkammer 11 erstreckt und den Durchtritt von Flüssigkeit aus der Separatorkammer 11 in die Verteilerkammer 12 ermöglicht. Die Verteilerkammer 12 kann, wie dargestellt, durch die T-Stäbe 13 radial nach außen fortsetzende Trennwände 15 in eine Mehrzahl von Auslasskammern unterteilt sein. Am Umfang der Verteilerkammer 12 sind Auslässe 16 angeordnet, an welche Leitungen oder Schläuche anschließbar sind. Jede Auslasskammer weist mindestens einen Auslass 16 auf, es können aber jeder Auslasskammer auch zwei oder mehr Auslässe 16 zugeordnet sein.

Im Horizontalschnitt nach Figur 3 ist auch der Aufbau des vorzugsweise wiederum vertikal orientierten Feststoffsammelbehälters 6 im einzelnen ersichtlich. Sein Inneres ist durch ein Gitter, das aus einer Reihe von wiederum im Querschnitt vorzugsweise T-förmigen Gitterstäben 61 gebildet ist, in einen Feststoffsammelraum 62 und einen Flüssigkeitssammelraum 63 unterteilt, so dass im Feststoffsammelbehälter 6 in den gesammelten Feststoffen noch enthaltene Restflüssigkeit durch die zwischen den Gitterstäben 61 gebildeten Schlitze in den Flüssigkeitssammelraum 63 ablaufen kann. Die Gitterstäbe 61 sind dabei so orientiert, dass ihr Profilkopf dem Feststoffsammelraum 62 zugewandt ist und ihr Fußsteg in den Flüssigkeitssammelraum 63 hineinragt.

Der Flüssigkeitssammelraum 63 steht unten mit einem Ablaufrohr 64 in Verbindung, das in das Zulaufrohr 3 hineinragt und eine in Strömungsrichtung der feststoffbeladenen Flüssigkeit im Zuführrohr 3, also nach oben, weisende Auslassöffnung 65 hat, so dass sich im Flüssigkeitssammelraum 63 sammelnde Flüssigkeit aus dem Ablaufrohr 64 nach dem Saugstrahlprinzip in den zulaufenden feststoffbeladenen Flüssigkeitsstrom im Zulaufrohr 3 hineingezogen wird. Die sich im Feststoffsammelraum 62 sammelnde Feststoffe können durch einen Auslass 66 abgelassen werden.

Im Betrieb der erfindungsgemäßen Vorrichtung bildet sich durch die Abförderung der Feststoffe aus der feststoffbeladenen Flüssigkeit durch die Schnecke 2 ein Feststoffpropfen oberhalb der Schnecke 2. Befindet sich die Schnecke in einer abgesenkten Position, werden die Durchtrittsschlitze 14 zwischen der Separatorkammer 11 und der Verteilerkammer 12 nur über den axialen Bereich von Feststoffen freigeräumt, über welchen sich die Schnecke innerhalb der Separatorkammer erstreckt. Nur in diesem Wirkungsbereich der Schnecke 2 kann ein im wesentlichen ungehinderter Flüssigkeitsdurchfluss von der Separatorkammer in die Verteilerkammer erfolgen, während in dem oberhalb der Schnecke 2 gelegenen Bereich der Durchfluss durch die Durchtrittsschlitze 14 wegen des sich dort bildenden Feststoffpropfens gedrosselt wird. Durch Verstellung der Schnecke 2 in dem Axialbereich zwischen der angehobenen und der abgesenkten Position kann also der von der Schnecke jeweils freigeräumte axiale Längenbereich der Durchtrittsschlitze 14 mehr oder weniger groß gemacht und damit der Durchfluss gesteuert werden. Zusätzlich kann durch Einsatz eines drehzahlverstellbaren Motors 22 auch die Drehzahl der Schnecke 2 verändert und auch auf diesem Weg der Durchfluss beeinflusst werden. Durch diese Möglichkeit der Durchflusssteuerung ist auch eine Anpassung des Betriebs der Vorrichtung an unterschiedliche Zuführdrücke der feststoffbeladenen Flüssigkeit und damit beispielsweise an verschiedene Güllefasssysteme möglich.

Das Abförderrohr 4 ist an seiner Innenwandung vorzugsweise mit radial einwärts vorstehenden, axial verlaufenden Rippen versehen, die verhindern, dass der sich bildende Feststoffpfropfen sich unter dem Einfluss der Schnecke 2 mitdreht und dadurch das Abfördern erschwert wird.

Wie eingangs schon erwähnt, kann zum Anfahren der Vorrichtung oberhalb bzw. stromab der Separatorkammer 11, beispielsweise im Einlassbereich des Abförderrohrs 4, eine Drosseleinrichtung in Gestalt einer Klappe oder eines Schiebers vorgesehen sein, um den Durchtritt von Flüssigkeit während der Anfahrtsphase im wesentlichen zu sperren, bis sich aus den Feststoffteilchen in der Flüssigkeit ein Feststoffpfropfen gebildet hat. Da derartige Drosseleinrichtungen an sich bekannt sind, ist das nicht besonders dargestellt.

Bei Ausbildung der Drosseleinrichtung als Klappe ist diese vorzugsweise mittels einer Feder in Schließrichtung vorgespannt, wobei die Federvorspannung vorzugsweise einstellbar ist. Die Klappe bleibt dann beim Anfahren geschlossen und beginnt sich zu öffnen, wenn der Staudruck aufgrund der sich aufbauenden Pfropfenbildung durch die Feststoffe die Federvorspannung übersteigt.

Indem die Vorrichtung modular aufgebaut ist, nämlich durch Verbindung der einzelnen Komponenten durch Flanschverbindungen 7, können die einzelnen Komponenten der Vorrichtung mit wenig Aufwand voneinander getrennt und auch wieder zusammengesetzt werden, um Wartungs- oder Reinigungsarbeiten schnell und einfach durchführen zu können.

## Patentansprüche

1. Kombinierte Separator- und Verteilvorrichtung für feststoffbeladene Flüssigkeiten, mit einer Separator- und Verteilerkammer (1), die mit einem ersten Ende mit einem Zulaufrohr (3) für die feststoffbeladene Flüssigkeit verbunden ist, die weiter mit einer Mehrzahl von Flüssigkeitsauslässen (16) versehen ist, und in welcher eine motorisch angetriebene Förderschnecke (2) angeordnet ist, die in der feststoffbeladenen Flüssigkeit enthaltene Feststoffe in Richtung vom zulaufseitigem Ende weg und zu einem entgegengesetzten, als Feststoffauslass dienenden Ende der Separator- und Verteilerkammer (1) hin fördert,
wobei die Separator- und Verteilerkammer (1) einen radial inneren, eine Separatorkammer (11) bildenden Bereich aufweist, in welchem die Förderschnecke (2) angeordnet ist, und einen davon durch eine Gitter- oder Siebanordnung getrennten radial äußeren und als Verteilerkammer (12) dienenden Bereich aufweist, und wobei die Auslässe (16) am Umfang der Verteilerkammer (12) angeordnet sind, **dadurch gekennzeichnet, dass** die Separator- und Verteilerkammer (1) vertikal orientiert ist und dass das Zulaufrohr (3) in das untere Ende der Separatorkammer (11) einmündet und der Feststoffauslass sich am oberen Ende der Separatorkammer (11) befindet.

2. Vorrichtung nach Anspruch 1, wobei die Förderschnecke (2) relativ zur Separatorkammer (11) in einem Axialbereich zwischen einer oberen Position, in welcher die Schnecke (2) die Separatorkammer (11) mindestens im wesentlichen vollständig durchsetzt, und einer abgesenkten Position, in welcher die Schnecke (2) mit einem oberen Bereich nur einen unteren Teilbereich der Separatorkammer (11) durchsetzt, verschiebbar angeordnet ist.

3. Vorrichtung nach Anspruch 2, wobei die gesamte, aus der Förderschnecke (2), einer die Schnecke (2) tragenden Welle (21) und einem die Welle (21) antreibenden Motor (22) gebildete Baugruppe mittels eines Teleskopmechanismus (23) axial verschiebbar ist.

4. Vorrichtung nach einem der Ansprüche 1 bis 3, wobei die Drehzahl der Förderschnecke (2) mittels eines drehzahlveränderlichen Motors (22) veränderbar ist.

5. Vorrichtung nach einem der Ansprüche 1 bis 4, wobei die die Separatorkammer (11) von der Verteilerkammer (12) trennende Gittervorrichtung aus einer Anzahl von achsparallel verlaufenden Gitterstäben (13) gebildet ist, die zwischen sich jeweils Schlitzöffnungen (14) bilden, die sich mindestens im wesentlichen über die gesamte axiale Länge der Separatorkammer (11) erstrecken.

6. Vorrichtung nach Anspruch 5, wobei die Gitterstäbe (13) jeweils ein T-förmiges Querschnittsprofil haben, dessen Kopf der Schnecke (2) zugewandt ist und dessen Fußsteg radial auswärts in die Verteilerkammer (12) hineinragt.

7. Vorrichtung nach Anspruch 6, wobei die Verteilerkammer (12) durch radiale Trennwände (15) in eine Mehrzahl von Auslasskammern unterteilt ist, wobei jeder Auslasskammer mindestens ein Auslass (16) zugeordnet ist.

8. Vorrichtung nach einem der Ansprüche 1 bis 7, wobei der Feststoffauslass am oberen Ende der Separatorkammer (11) über ein Überführungsrohr (5) mit einem Feststoffsammelbehälter (6) verbunden ist, der vorzugsweise vertikal angeordnet und durch eine Gitter- oder Siebanordnung in eine Feststoffsammelkammer (62) und eine Flüssigkeitssammelkammer (63) unterteilt ist sowie einen Feststoffauslass (66) aufweist, und wobei die Flüssigkeitssammelkammer (62) über ein Ablaufrohr (64) in das Zulaufrohr (3) rückgeführt wird, wobei das Ablaufrohr (64) vorzugsweise in Strömungsrichtung der in das Zulaufrohr (3) zugeführten feststoffbeladenen Flüssigkeit in das Zulaufrohr (3) aus mündet.

9. Vorrichtung nach Anspruch 8, wobei der Feststoffsammelbehälter (6) durch ein aus im Querschnitt T-förmigen Gitterstäben (61), deren Profilkopf der Feststoffsammelkammer (62) zugewandt ist und deren Fußsteg in die Flüssigkeitssammelkammer (63) hineinragt, gebildetes Gitter in die Feststoffsammelkammer (62) und die Flüssigkeitssammelkammer (63) unterteilt ist.

10. Vorrichtung nach einen der Ansprüche 1 bis 9, wobei zwischen dem Auslassende der Separatorkammer (11) und dem Feststoffauslass eine Drosseleinrichtung befindet, um während einer Anfahrphase der Vorrichtung die Durchtrittsverbindung zwischen der Separatorkammer und dem Feststoffauslass gegen einen Flüssigkeitsaustritt im wesentlichen zu verschließen.

11. Vorrichtung nach Anspruch 10, wobei die Drosseleinrichtung als Klappe oder Schieber ausgebildet ist.

12. Vorrichtung nach einen der Ansprüche 1 bis 11, wobei der Feststoffauslass ein sich oberhalb der Separatorkammer (11) anschließendes Abförderrohr (4) gebildet ist, dessen Innenwandung mit radial einwärts vorspringenden axialen Rippen versehen ist, die ein Mitdrehen eines sich bildenden Feststoffpfropfens unter dem Einfluss der Schnecke (2) verhindern.

13. Vorrichtung nach einem der Ansprüche 1 bis 11, die modular aus einzelnen Komponenten aufgebaut ist, die durch Flanschverbindungen (7) lösbar miteinander verbunden sind.

## Claims

1. Combined separator and distribution device for solids-loaded liquids, with a separator and distributor chamber (1) that is connected to a feeding tube (3) for the solids-loaded liquid with a first end and is further provided with a plurality of liquid outlets (16), and in which a motor-driven screw conveyor (2) is arranged, the screw conveying solids contained in the solids-loaded liquid in a direction away from its end on the feed side and towards an opposite end of the separator and distributor chamber (1) that serves as a solids outlet,
wherein the separator and distributor chamber (1) has a radially inward area forming a separator chamber (11) and having arranged therein the screw conveyor (2), and a radially outward area separated therefrom by means of a grid or screen assembly and serving as a distributor chamber (12), and wherein the outlets (16) are arranged on the circumference of the distributor chamber (12), **characterised in that** the separator and distributor chamber (1) is oriented vertically and **in that** the feeding tube (3) opens into the lower end of the separator chamber (11) and the solids outlet is located on the upper end of the separator chamber (11).

2. The apparatus according to claim 1, wherein the screw conveyor (2) is arranged in an axial region with respect to the separator chamber (11) so as to be displaceable between an upper position in which the screw (2) penetrates, at least substantially, the separator chamber (11) completely, and a lowered position in which the screw (2) only penetrates a lower subregion of the separator chamber (11) with a lower portion.

3. The apparatus according to claim 2, wherein the whole assembly, consisting of the screw conveyor (2), a shaft (21) carrying the screw (2) and a motor (22) driving the shaft (21), is axially displaceable by means of a telescopic mechanism (23).

4. The apparatus according to any one of claims 1 to 3, wherein the speed of the screw conveyor (2) can be varied by means of a variable speed motor (22).

5. The apparatus according to any one of claims 1 to 4, wherein the grid device separating the separator chamber (11) from the distributor chamber (12) is formed by a number of grid bars (13) running axially in parallel and respectively forming slot openings (14) therebetween which extend over at least substantially the whole axial length of the separator chamber (11).

6. The apparatus according to claim 5, wherein the grid bars (13) each have a T-shaped cross-sectional profile, with its flange facing the screw (2) and its foot web protruding radially outwards into the distributor chamber (12).

7. The apparatus according to claim 6, wherein the distributor chamber (12) is divided into a plurality of outlet chambers by radial partition walls (15), wherein each outlet chamber is associated with at least one outlet (16).

8. The apparatus according to any one of claims 1 to 7, wherein the solids outlet is connected, on the upper end of the separator chamber (11), to a solids collection container (6) by means of a transfer tube (5), the container being preferably arranged vertically, divided into a solids collection chamber (62) and a liquid collection chamber (63) by means of a grid or screen assembly, and having a solids outlet (66), and wherein the liquid collection chamber (62) is returned into the feeding tube (3) via a discharge tube (64), wherein the discharge tube (64) opens into the feeding tube (3) preferably in the direction of the flow of the solids-loaded liquid that is returned into the feeding tube (3).

9. The apparatus according to claim 8, wherein the solids collection container (6) is divided into the solids collection chamber (62) and the liquid collection chamber (63) by means of a grid that is comprised of grid bars (61) having a T-shaped cross-sectional profile with its flange facing the solids collection chamber (62) and its foot web protruding into the liquid collection chamber (63).

10. The apparatus according to any one of claims 1 to 9, wherein a throttle device is located between the outlet end of the separator chamber (11) and the solids outlet, in order to substantially seal off the passage connection between the separator chamber and the solids outlet against any liquid leakage in the start-up phase of the apparatus.

11. The apparatus according to claim 10, wherein the throttle device is configured as a flap or a gate.

12. The apparatus according to any one of claims 1 to 11, wherein the solids outlet is formed of a conveying tube (4) connected above the separator chamber (11), the inner wall of the tube being provided with radially inwardly protruding axial ribs which prevent any solids plug formed therein from rotating under the influence of the screw (2).

13. The apparatus according to any one of claims 1 to 11, having a modular structure of individual components connected to one another by means of flange connections (7).

## Revendications

1. Appareil de séparation et distribution pour liquides chargés de matières solides, avec une chambre de séparation et distribution (1) qui est reliée, avec une première extrémité, à un tube d'alimentation (3) pour le liquide chargé de matières solides, en outre est prévue d'une pluralité de sorties de liquide (16), et dans laquelle est arrangé un convoyeur à vis (2) entraîné par moteur, le convoyeur transportant les solides contenus dans le liquide chargé de matières solides dans une direction s'éloignant de l'extrémité côté alimentation, et vers une extrémité de la chambre de séparation et distribution (1) servant comme sortie de solides,
dans lequel la chambre de séparation et distribution (1) présente une région radialement intérieure formant une chambre de séparation (11) dans laquelle est disposé le convoyeur à vis (2), et une région radialement extérieure et séparée de celle-ci par un ensemble de grille ou de tamis et servant comme chambre de distribution (12), et dans lequel les sorties (16) sont disposées à la périphérie de la chambre de séparation (12), **caractérisé en ce que** la chambre de séparation et distribution (1) est orientée verticalement, et **en ce que** le tube d'alimentation (3) débouche dans l'extrémité inférieure de la chambre de séparation (11) et la sortie de solides est située au niveau de l'extrémité supérieure de la chambre de séparation (11).

2. Appareil selon la revendication 1, dans lequel le convoyeur à vis (2) est disposé, dans une région axiale par rapport à la chambre de séparation (11), de manière déplaçable entre une position en haute, dans laquelle la vis (2) traverse la chambre de séparation (11) essentiellement complètement, et une position abaissée, dans laquelle la vis (2), avec une partie supérieure, ne traverse qu'une sous-région inférieure de la chambre de séparation (11).

3. Appareil selon la revendication 2, dans lequel tout l'ensemble, consistant en le convoyeur à vis (2), un arbre (21) portant la vis (2) et un moteur (22) entraînant l'arbre (21), peut être déplacé au moyen d'un mécanisme télescopique (23).

4. Appareil selon l'une quelconque des revendications 1 à 3, dans lequel la vitesse du convoyeur à vis (2) peut être variée au moyen d'un moteur (22) à vitesse variable.

5. Appareil selon l'une quelconque des revendications 1 à 4, dans lequel le dispositif de grille séparant la chambre de séparation (11) de la chambre de distribution (12) est constitué d'une série de barreaux avec axes parallèles (13) qui forment des ouvertures en forme de fente (14) entre eux, les ouvertures s'étendant au moins essentiellement sur toute la longueur axiale de la chambre de séparation (11).

6. Appareil selon la revendication 5, dans lequel les barreaux (13) respectivement ont un profilé en coup sous forme de T dont les ailes font face à la vis (2) et l'âme fait saillie radialement vers l'extérieur dans la chambre de distribution (12).

7. Appareil selon la revendication 6, dans lequel la chambre de distribution (12) est divisée en une pluralité de chambres de sortie par partitions radiales (15), au moins une sortie (16) étant associée à chaque chambre de distribution.

8. Appareil selon l'une quelconque des revendications 1 à 7, dans lequel la sortie de solides est relié au niveau de l'extrémité supérieure de la chambre de séparation (11) avec un récipient collecteur de solides (6) au moyen d'un tube de transfert (5), le récipient étant de préférence disposé verticalement et divisé en une chambre collectrice de solides (62) et une chambre collectrice de liquide (63) par un ensemble de grille ou de tamis, et présentant une sortie de solides (66), et dans lequel la chambre collectrice de liquide (62) est reliée en retour avec le tube d'alimentation (3) par un tube de décharge (64), dans lequel le tube de décharge (64) débouche dans le tube d'alimentation (3) de préférence dans la direction de flux du liquide chargé de solides qui est alimenté dans le tube d'alimentation (3).

9. Appareil selon la revendication 8, dans lequel le récipient collecteur de solides (6) est divisé en la chambre collectrice de solides (62) et la chambre collectrice de liquide (63), au moyen d'une grille formé par barreaux (61) en section transversale sous forme de T dont les ailes font face à la chambre collectrice de solides (62) et dont l'âme fait saillie dans la chambre collectrice de liquide (63).

10. Appareil selon l'une quelconque des revendications 1 à 9, dans lequel un dispositif d'étranglement est situé entre l'extrémité de sortie de la chambre de séparation (11) et la sortie de solides, afin de sensiblement sceller la liaison de passage entre la chambre de séparation et la sortie de solides contre une fuite de liquide dans la phase de démarrage de l'appareil.

11. Appareil selon la revendication 10, dans lequel le dispositif d'étranglement est configuré sous forme de clapet ou de robinet-vanne.

12. Appareil selon l'une quelconque des revendications 1 à 11, dans lequel la sortie de solides est configurée sous forme d'un tube d'évacuation (4) relié au-dessus de la chambre de séparation (11) dont la paroi intérieure est prévue des nervures axiales radialement en saillie vers l'intérieur qui empêchent la rotation sous l'influence de la vis (2) d'un bouchon de solides possiblement formé.

13. Appareil selon l'une quelconque des revendications 1 à 11, ayant une structure modulaire des composants individuels qui sont reliés entre eux de manière amovible par raccordements à bride (7).
